# EUROPEAN PATENT SPECIFICATION

(11) **EP 3 444 509 B1**
(45) Date of publication and mention of the grant of the patent: **08.04.2020**
(21) Application number: 18158358.4
(22) Date of filing: 23.02.2018
(51) Int. Cl.: F16K 11/20, E03C 1/04, F16K 11/00, F16K 27/00, G05D 23/13

(54) **THERMOSTATIC FAUCET HAVING PLASTIC BODY**
THERMOSTATISCHE ARMATUR MIT KUNSTSTOFFKÖRPER
ROBINET THERMOSTATIQUE AYANT UN CORPS EN PLASTIQUE

(30) Priority: 16.08.2017 CN 201721027339 U
(43) Date of publication of application: 20.02.2019
(73) Proprietor: Xiamen Lota International Co., Ltd., 361022 Xiamen, Fujian (CN); Lota Xiamen Industry Co., Ltd., 361100 Xiamen, Fujian (CN)
(72) Inventor: He, Yongqiang, Xiamen, Fujian 361022 (CN); Ye, Xianqing, Xiamen, Fujian 361022 (CN); Hong, Hongxing, Xiamen, Fujian 361022 (CN)
(74) Representative: Verscht, Thomas Kurt Albert

(56) References cited:
- EP-A2- 2 241 685
- EP-A2- 2 386 927
- EP-A2- 2 388 676
- CN-U- 203 115 189
- CN-Y- 201 037 555

## Description

### BACKGROUND OF THE INVENTION

### 1. Field of the Invention

The present invention relates to a thermostatic faucet structure, and more particularly to a thermostatic faucet having a plastic body.

### 2. Description of the Prior Art

Most of thermostatic faucets on the market are mainly made of copper, which is expensive and leads to higher manufacturing costs. Moreover, the thermal conductivity of a copper material is good. When in use, hot water easily makes the surface temperature of the faucet body too high. The faucet body may scald the user.

In order to solve this problem, Chinese Patent Publication No. CN203115189U discloses a thermostatic faucet structure which is directly connected to a temperature control mechanism through a copper pipe. The copper pipe is an independent hot water inlet passage and is not in contact with an outer housing, so that the faucet won't scald the user. The faucet adopts the outer housing which is not in contact with water and an all-plastic inner core structure. This can reduce the amount of copper greatly and reduce the material cost significantly. However, the copper pipe needs to be connected to a hot water supply pipe and the temperature control mechanism through a water inlet connector and a water outlet connector respectively, and then a hot water passage can be formed. That is, the hot water passage of thermostatic faucet structure is formed by multiple components, which has high risk of water leakage and high manufacturing cost.

In addition, when the thermostatic valve core of the temperature control mechanism of the thermostatic faucet structure and the flow valve core of the flow control mechanism are connected with the plastic inner core, both adopt lids to connect with the plastic inner core by means of screw threads. The stress part of the faucet body is centralized on the plastic inner core, reducing the strength performance of the faucet body. The strength of the plastic screw threads on the plastic inner core is not enough. The faucet body is easy to aging, which easily leads to water leakage.

EP 2 241 685 A2, EP 2 388 676 A2 and EP 2 386 927 A2 disclose known thermostatic faucets. CN 203 115 189 U discloses a thermostatic faucet as defined in the preamble of claim 1.

### SUMMARY OF THE INVENTION

The primary object of the present invention is to provide a thermostatic faucet having a plastic body. The thermostatic faucet comprises a plastic inner body which is in contact with water and a metal housing which is not in contact with water to prevent the user from being scalded. A cold water passage and a hot water passage are integrally formed in the plastic inner body to reduce the parts, simplify the assembly and lower the manufacturing cost.

In order to achieve the aforesaid object, the thermostatic faucet of the present invention comprises, as defined in claim 1, a metal housing, a plastic inner body disposed in the metal housing, a plastic valve rod and a plastic shaft seat which are connected in the plastic inner body, a flow valve core and a thermostatic valve core which pass through the metal housing and are mated with the plastic valve rod and the plastic shaft seat respectively. The plastic inner body is provided with a first water inlet connector, a second water inlet connector and a water outlet connector. The first water inlet connector, the second water inlet connector and the water outlet connector are integrally formed with the plastic inner body. The first water inlet connector is connected with the plastic shaft seat through a chamber of the plastic inner body to form a first water inlet passage. The second water inlet connector is connected with the plastic shaft seat to form a second water inlet passage. The first water inlet passage is a hot water passage or a cold water passage, correspondingly, the second water inlet passage is a cold water passage or a hot water passage. The plastic valve rod cooperates with the plastic inner body to form a chamber communicated with the water outlet connector to form a water outlet passage.

The plastic inner body has a first chamber, a second chamber, a third chamber and a mating chamber therein. The second chamber, the third chamber and the mating chamber communicate with each other. The mating chamber is connected between the second chamber and the third chamber. The plastic valve rod is accommodated in the second chamber. One end of the plastic valve rod is connected to one end of the mating chamber. The plastic shaft seat is fitted in the third chamber and has one end connected to another end of the mating chamber. One end of the first chamber communicates with the plastic shaft seat in the third chamber. Another end of the first chamber is provided with a plug. The first water inlet connector is connected with the plastic shaft seat through the first chamber to form the first water inlet passage. An inner chamber of the plastic shaft seat, the mating chamber and an inner chamber of the plastic valve rod form a mixed water passage. The plastic valve rod cooperates with the second chamber to form a water outlet chamber. The water outlet chamber communicates with the water outlet connector to form the water outlet passage.

The metal housing includes a front housing and a rear end cover to mate and connect with each other. Two ends of the front housing are formed with mating holes for insertion of the flow valve core and the thermostatic valve core, respectively.

The flow valve core passes through the mating hole at one end of the front housing and is partially accommodated in the second chamber of the plastic inner body and connected with the plastic valve rod and then is fixed by a metal sealing lid.

The metal sealing lid is provided with a screw portion. The screw portion is inwardly reduced to form a reduced portion. The metal sealing lid is sleeved on the flow valve core. The reduced portion is connected in the second chamber of the plastic inner body. The screw portion is screwed with the mating hole. A stepped surface formed between the screw portion and the reduced portion is pressed against the plug of the plastic inner body.

Preferably, a thermal insulation pad is provided between the plug and the metal sealing lid.

Preferably, the thermostatic valve core passes through the mating hole at the other end of the front housing and is partially accommodated in the plastic shaft seat and then fixed by a metal upper lid to be screwed with the mating hole.

Preferably, the metal housing is made of zinc alloy.

Preferably, the plug is a copper plug.

The present invention adopts the metal housing to ensure the quality of the product. The metal housing is not in contact with water. The plastic inner body is in contact with water. The plastic inner body plays the role of thermal insulation, so that the thermostatic faucet won't scald the user. In the thermostatic faucet, the cold water passage, the hot water passage, the mixed water passage and the water outlet passage are integrally formed in the plastic inner body. The plastic inner body has the water inlet connectors and the water outlet connector. The water inlet connectors and the water outlet connector are directly connected with the external water passages. The parts are reduced, the production process is simplified, the manufacturing cost of the thermostatic faucet is lowered, and the risk of water leakage generated by the multiple components is reduced.

In addition, in the present invention, the fixing positions of the flow valve core and the thermostatic valve core relative to the plastic inner body are transferred from the plastic inner body to the metal housing, so that the stress points of the thermostatic faucet won't be concentrated on the plastic inner body to affect the strength performance of the product. Besides, the metal sealing lid, the metal upper lid and the metal housing are connected through metal threads. Compared with plastic threads, the strength of the metal threads is larger, thereby lowering the risk of leakage.

### BRIEF DESCRIPTION OF THE DRAWINGS

FIG. 1 is an exploded view of the present invention;
FIG. 2 is another exploded view of the present invention;
FIG. 3 is a perspective view of the present invention;
FIG. 4 is a sectional view of the present invention;
FIG. 5 is an exploded view of the inner body of the present invention;
FIG. 6 is a sectional view of the inner body of the present invention; and
FIG. 7 is a perspective view of the metal sealing lid of the present invention;

### DETAILED DESCRIPTION OF THE PREFERRED EMBODIMENTS

Embodiments of the present invention will now be described, by way of example only, with reference to the accompanying drawings.

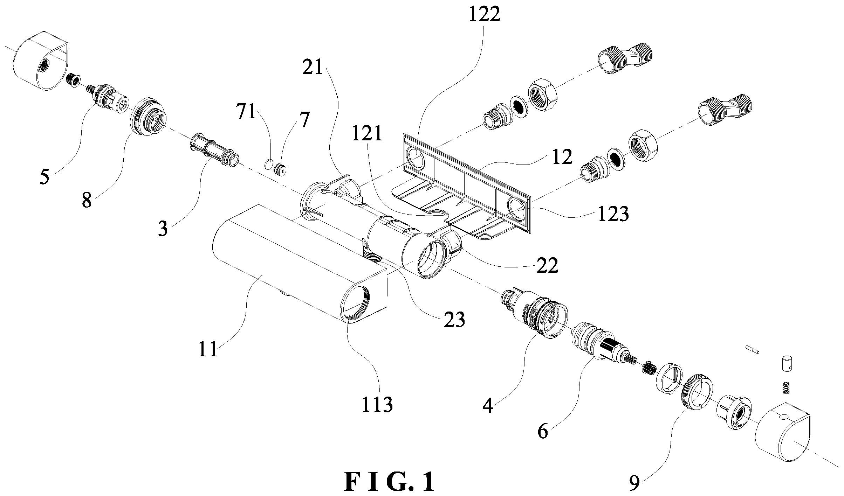

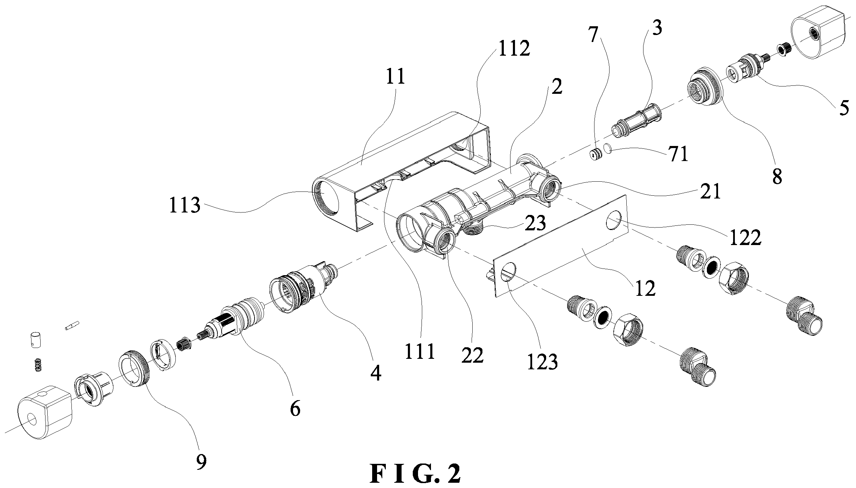

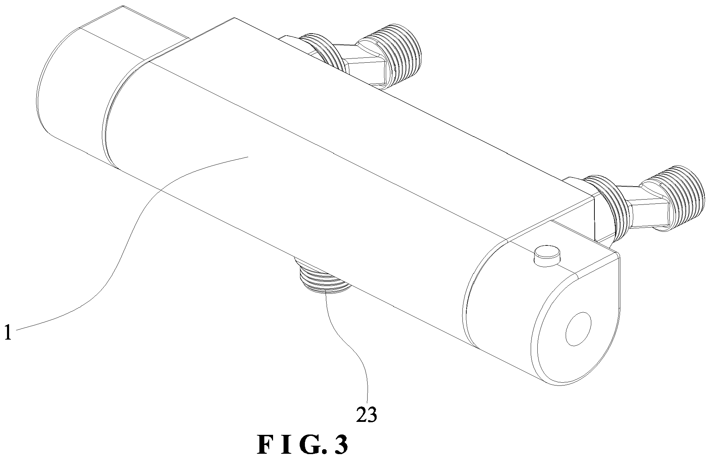

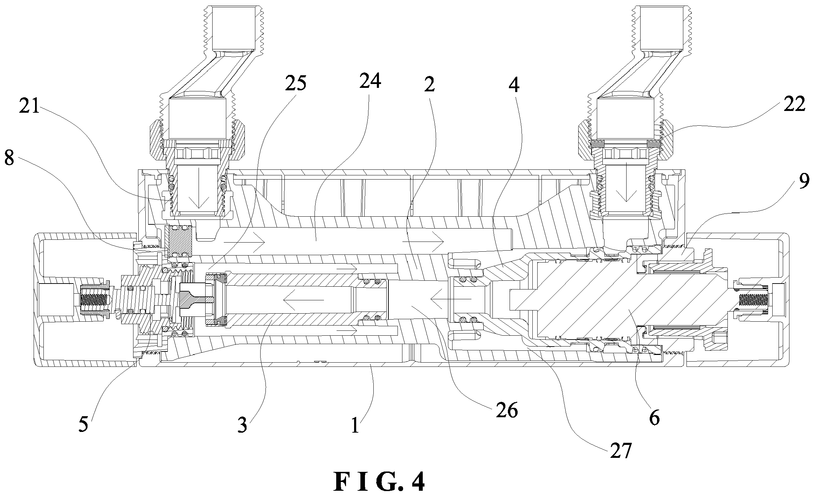

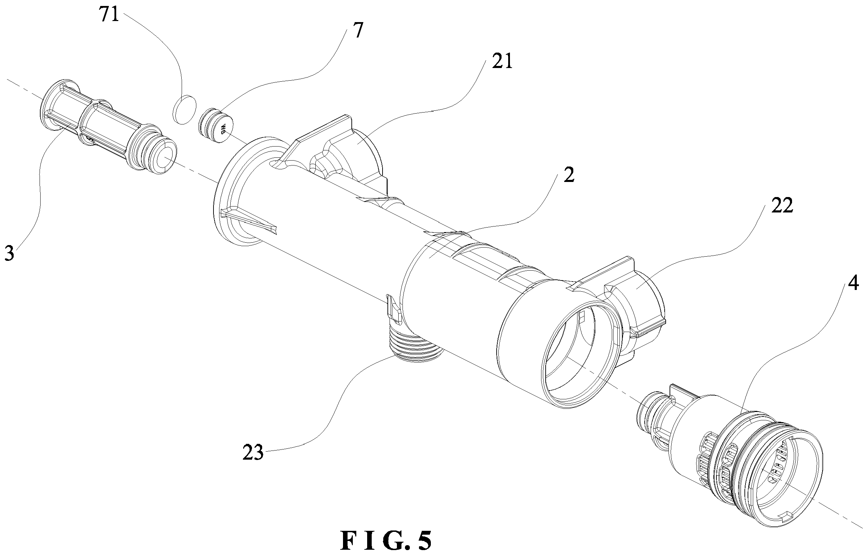

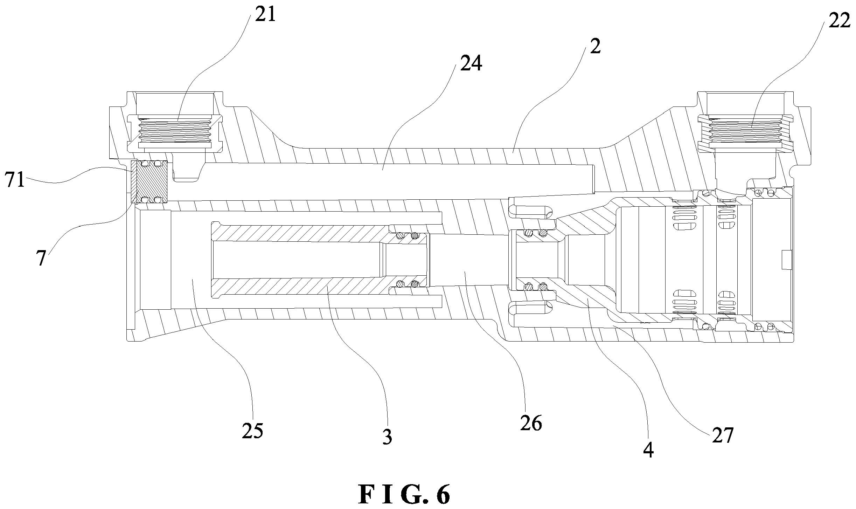

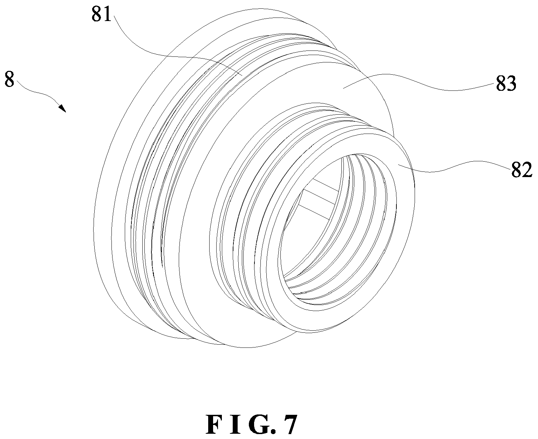

As shown in FIG. 1 to FIG. 7, the present invention discloses a thermostatic faucet having a plastic body. The thermostatic faucet comprises a metal housing 1, a plastic inner body 2 disposed in the metal housing 1, a plastic valve rod 3 and a plastic shaft seat 4 which are connected in the plastic inner body 2, a flow valve core 5 and a thermostatic valve core 6 which pass through the metal housing 1 and are mated with the plastic valve rod 2 and the plastic shaft seat 4, respectively.

The plastic inner body 2 is provided with a first water inlet connector 21, a second water inlet connector 22 and a water outlet connector 23. The plastic inner body 2 has a first chamber 24, a second chamber 25, a third chamber 27, and a mating chamber 26 therein. The second chamber 25, the third chamber 27 and the mating chamber 26 communicate with each other. The mating chamber 26 is connected between the second chamber 25 and the third chamber 27. The plastic valve rod 3 is accommodated in the second chamber 25. One end of the plastic valve rod 3 is connected to one end of the mating chamber 26. The plastic shaft seat 4 is fitted in the third chamber 27 and has one end connected to another end of the mating chamber 26. The first water inlet connector 21 is connected to the sidewall of the first chamber 24 and communicates with the first chamber 24. One end of the first chamber 24 communicates with the plastic shaft seat 4 in the third chamber 27. Another end of the first chamber 24 is provided with a plug 7. The first water inlet connector 21 is connected with the plastic shaft seat 4 through the first chamber 24 to form a first water inlet passage. The second water inlet connector 22 is connected with the plastic shaft seat 4 to form a second water inlet passage. The first water inlet passage is a hot water passage or a cold water passage, correspondingly, and the second water inlet passage is a cold water passage or a hot water passage. An inner chamber of the plastic shaft seat 4, the mating chamber 26 and an inner chamber of the plastic valve rod 3 form a mixed water passage. The plastic valve rod 3 cooperates with the second chamber 25 to form a water outlet chamber. The water outlet chamber communicates with the water outlet connector 23 to form a water outlet passage.

The plastic inner body 2, the plug 7, the plastic valve rod 3 and the plastic shaft seat 4 jointly form a main body assembly.

The present invention adopts the metal housing 1 to ensure the quality of the product. The metal housing 1 is not in contact with water. The plastic inner body 2 is in contact with water. The plastic inner body 2 plays the role of thermal insulation, so that the thermostatic faucet won't scald the user. In the thermostatic faucet, the cold water passage, the hot water passage, the mixed water passage and the water outlet passage are integrally formed in the plastic inner body 2. The plastic inner body 2 has the first water inlet connector 21, the second water inlet connector 22 and the water outlet connector 23. The first water inlet connector 21, the second water inlet connector 22 and the water outlet connector 23 are directly connected with the external water passages. The parts are reduced, the production process is simplified, the manufacturing cost of the thermostatic faucet is lowered, and the risk of water leakage generated by the multiple components is reduced.

The metal housing 1 may be made of zinc alloy, and includes a front housing 11 and a rear end cover 12. The middle portion of the front housing 11 is formed with a notch 111. Two ends of the front housing 11 are formed with a first mating hole 112 and a second mating hole 113 for insertion of the flow valve core 5 and the thermostatic valve core 6, respectively. The inner sides of the first mating hole 112 and the second mating hole 113 are formed with screw threads. The rear end cover 12 has a notch 121. The notch 121 cooperates with the notch 111 of the front housing 11 to form a third mating hole through which the water outlet connector 23 passes. The front end cover 12 further has a fourth mating hole 122 and a fifth mating hole 123 to mate with the first water inlet connector 21 and the second water inlet connector 22 respectively.

The flow valve core 5 passes through the first mating hole 112 and is partially accommodated in the second chamber 25 of the plastic inner body 2 and is connected with the plastic valve rod 3 and then is fixed by a metal sealing lid 8. The metal sealing lid 8 is provided with a screw portion 81 mated with the first mating hole 112 of the front housing 11. The screw portion 81 is inwardly reduced to form a reduced portion 82. The metal sealing lid 8 is sleeved on the flow valve core 5. The reduced portion 82 is connected in the second chamber 25 of the plastic inner body 2. The screw portion 81 is screwed with the first mating hole 112 of the front housing 11. At this time, a stepped surface 83 formed between the screw portion 81 and the reduced portion 82 is pressed against the plug 7 of the plastic inner body 2 to further reinforce the connection of the plug 7. The plug 7 may be a copper plug. A thermal insulation pad 71 may be provided between the plug 7 and the metal sealing lid 8 to prevent the hot from being conducted to the metal sealing lid 8 via the plug 7.

The thermostatic valve core 6 passes through the second mating hole 113 and is partially accommodated in the plastic shaft seat 4 and then sealed and fixed by a metal upper lid 9. The outer circumference of the metal upper lid 9 is provided with a screw thread and is screwed with the second mating hole 113.

As described above, in the present invention, the fixing positions of the flow valve core 5 and the thermostatic valve core 6 relative to the plastic inner body 2 are transferred from the plastic inner body 2 to the metal housing 1, so that the stress points of the thermostatic faucet won't be concentrated on the plastic inner body 2 to affect the strength performance of the product. In addition, the metal sealing lid 8, the metal upper lid 9 and the metal housing 1 are connected through metal threads. Compared with plastic threads, the strength of the metal threads is larger, thereby lowering the risk of leakage.

Although particular embodiments of the present invention have been described in detail for purposes of illustration, various modifications and enhancements may be made without departing from the scope of the present invention. Accordingly, the present invention is not to be limited except as by the appended claims.

## Claims

1. A thermostatic faucet, comprising a metal housing (1), a plastic inner body (2) disposed in the metal housing (1), a plastic valve rod (3) and a plastic shaft seat (4) which are connected in the plastic inner body (2), a flow valve core (5) and a thermostatic valve core (6) which pass through the metal housing (1) and are mated with the plastic valve rod (3) and the plastic shaft seat (4) respectively, wherein the plastic inner body (2) is provided with a first water inlet connector (21), a second water inlet connector (22) and a water outlet connector (23), the first water inlet connector (21), the second water inlet connector (22) and the water outlet connector (23) are integrally formed with the plastic inner body (2); the first water inlet connector (21) is connected with the plastic shaft seat (4) through a chamber of the plastic inner body (2) to form a first water inlet passage, the second water inlet connector (22) is connected with the plastic shaft seat (4) to form a second water inlet passage; one of the first water inlet passage and the second water inlet passage is a hot water passage, the other of the first water inlet passage and the second water inlet passage is a cold water passage; and the plastic valve rod (3) cooperates with the plastic inner body (2) to form a chamber communicated with the water outlet connector (23) to form a water outlet passage
wherein the plastic inner body (2) has a first chamber (24), a second chamber (25), a third chamber (27) and a mating chamber (26) therein, the second chamber (25), the third chamber (27) and the mating chamber (26) communicate with each other, the mating chamber (26) is connected between the second chamber (25) and the third chamber (27); the plastic valve rod (3) is accommodated in the second chamber (25), one end of the plastic valve rod (3) is connected to one end of the mating chamber (26); the plastic shaft seat (4) is fitted in the third chamber (27) and has one end connected to another end of the mating chamber (26); one end of the first chamber (24) communicates with the plastic shaft seat (4) in the third chamber (27), another end of the first chamber (24) is provided with a plug (7); the first water inlet connector (21) is connected with the plastic shaft seat (4) through the first chamber (24) to form the first water inlet passage; an inner chamber of the plastic shaft seat (4), the mating chamber (26) and an inner chamber of the plastic valve rod (3) form a mixed water passage, the plastic valve rod (3) cooperates with the second chamber (25) to form a water outlet chamber, and the water outlet chamber communicates with the water outlet connector (23) to form the water outlet passage,
wherein the metal housing (1) includes a front housing (11) and a rear end cover (12) to mate and connect with each other, and two ends of the front housing (11) are formed with mating holes (112, 113) for insertion of the flow valve core (5) and the thermostatic valve core (6), respectively,
wherein the flow valve core (5) passes through the mating hole (112) at one end of the front housing (11) and is partially accommodated in the second chamber (25) of the plastic inner body (2) and connected with the plastic valve rod (3) and then is fixed by a metal sealing lid (8),
wherein the metal sealing lid (8) is provided with a screw portion (81), the screw portion (81) is inwardly reduced to form a reduced portion (82), the metal sealing lid (8) is sleeved on the flow valve core (5), the reduced portion (82) is connected in the second chamber (25) of the plastic inner body (2), and the screw portion (81) is screwed with the mating hole (112),
the thermostatic faucet being **characterized in that** a stepped surface (83) formed between the screw portion (81) and the reduced portion (82) is pressed against the plug (7) of the plastic inner body (2).

2. The thermostatic faucet as claimed in claim 1, wherein a thermal insulation pad (71) is provided between the plug (7) and the metal sealing lid (8).

3. The thermostatic faucet as claimed in claim 1, wherein the thermostatic valve core (6) passes through the mating hole (113) at the other end of the front housing (11) and is partially accommodated in the plastic shaft seat (4) and then fixed by a metal upper lid (9) to be screwed with the mating hole (113).

4. The thermostatic faucet as claimed in claim 1, wherein the metal housing (1) is made of zinc alloy.

5. The thermostatic faucet as claimed in claim 1, wherein the plug (7) is a copper plug.

## Patentansprüche

1. Eine Thermostatikarmatur, welche folgendes aufweist: ein Metallgehäuse (1), einen Kunststoffinnenkörper (2), welcher in dem Metallgehäuse (1) angeordnet ist, eine Kunststoffventilstange (3) und einen Kunststoffschaftsitz (4), welche in dem Kunstoffinnenkörper (2) verbunden sind, ein Strömungsventilkern (5) und einen Thermostatikventilkern (6), welche durch das Metallgehäuse (1) laufen und mit der Kunststoffventilstange (3) bzw. dem Kunststoffschaftsitz (4) zusammengepasst sind, wobei der Kunststoffinnenkörper (2) mit einer ersten Wassereinlassverbindungseinrichtung (21), einer zweiten Wassereinlassverbindungseinrichtung (22) und einer Wasserauslassverbindungseinrichtung (23) versehen ist, die erste Wassereinlassverbindungseinrichtung (21), die zweite Wassereinlassverbindungseinrichtung (22) und die Wasserauslassverbindungseinrichtung (23) sind einstückig mit dem Kunststoffinnenkörper (2) gebildet; die erste Wassereinlassverbindungseinrichtung (21) ist mit dem Kunststoffschaftsitz (4) durch eine Kammer des Kunststoffinnenkörpers (2) verbunden, um einen ersten Wassereinlassdurchlass zu bilden, die zweite Wassereinlassverbindungseinrichtung (22) ist mit dem Kunststoffschaftsitz (4) verbunden, um einen zweiten Wassereinlassdurchlass zu bilden; einer von dem ersten Wassereinlassdurchlass und dem zweiten Wassereinlassdurchlass ist ein Heißwasserdurchlass, der andere von dem ersten Wassereinlassdurchlass und dem zweiten Wassereinlassdurchlass ist ein Kaltwasserdurchlass; und die Kunststoffventilstange (3) arbeitet mit dem Kunststoffinnenkörper (2) zusammen, um eine Kammer zu bilden, die mit der Wasserauslassverbindungseinrichtung (23) in Verbindung steht, um einen Wasserauslassdurchlass zu bilden
wobei der Kunststoffinnenkörper (2) eine erste Kammer (24), eine zweite Kammer (25), eine dritte Kammer (27) und eine Zusammenpasskammer (26) darin hat, die zweite Kammer (25), die dritte Kammer (27) und die Zusammenpasskammer (26) stehen miteinander in Verbindung, die Zusammenpasskammer (26) ist zwischen der zweiten Kammer (25) und der dritten Kammer (27) verbunden; die Kunststoffventilstange (3) ist in der zweiten Kammer (25) untergebracht, ein Ende der Kunststoffventilstange (3) ist mit einem Ende der Zusammenpasskammer (26) verbunden; der Kunststoffschaftsitz (4) ist in die dritte Kammer (27) eingepasst und hat ein Ende, das mit einem anderen Ende der Zusammenpasskammer (26) verbunden ist; ein Ende der ersten Kammer (24) steht mit dem Kunststoffschaftsitz (4) in der dritten Kammer (27) in Verbindung, ein anderes Ende der ersten Kammer (24) ist mit einem Stecker (7) versehen; die erste Wassereinlassverbindungseinrichtung (21) ist mit dem Kunststoffschaftsitz (4) durch die erste Kammer (24) verbunden, um den ersten Wassereinlassdurchlass zu bilden; eine Innenkammer des Kunststoffschaftsitzes (4), die Zusammenpasskammer (26) und eine Innenkammer der Kunststoffventilstange (3) bilden einen Mischwasserdurchlass, die Kunststoffventilstange (3) arbeitet mit der zweiten Kammer (25) zusammen, um eine Wasserauslasskammer zu bilden, und die Wasserauslasskammer steht mit der Wasserauslassverbindungseinrichtung (23) in Verbindung, um den Wasserauslassdurchlass zu bilden,
wobei das Metallgehäuse (1) ein vorderes Gehäuse (11) und eine hintere Endabdeckung (12) aufweist, um miteinander zusammenzupassen und zu verbinden, und zwei Enden des vorderen Gehäuses (11) sind mit Zusammenpasslöchern (112, 113) zum Einsetzen des Strömungsventilkerns (5) bzw. des Thermostatikventilkerns (6) gebildet,
wobei der Strömungsventilkern (5) durch das Zusammenpassloch (112) an einem Ende des vorderen Gehäuses (11) läuft und teilweise in der zweiten Kammer (25) des Kunststoffinnenkörpers (2) untergebracht ist und mit der Kunststoffventilstange (3) verbunden und dann durch einen Metalldichtungsdeckel (8) fixiert ist,
wobei der Metalldichtungsdeckel (8) mit einem Schraubenteil (81) versehen ist, der Schraubenteil (81) ist nach innen reduziert, um einen reduzierten Teil (82) zu bilden, der Metalldichtungsdeckel (8) ist hülsenartig auf dem Strömungsventilkern (5) angeordnet, der reduzierte Teil (82) ist in der zweiten Kammer (25) des Kunststoffinnenkörpers (2) verbunden, und der Schraubenteil (81) ist mit dem Zusammenpassloch (112) verschraubt,
die Thermostatikarmatur ist **dadurch gekennzeichnet, dass**
eine gestufte Oberfläche (83), welche zwischen dem Schraubenteil (81) und dem reduzierten Teil (82) gebildet ist, gegen den Stecker (7) des Kunststoffinnenkörpers (2) gedrückt wird.

2. Die Thermostatikarmatur nach Anspruch 1, wobei ein Wärmeisolationskissen (71) zwischen dem Stecker (7) und dem Metalldichtungsdeckel (8) vorgesehen ist.

3. Die Thermostatikarmatur nach Anspruch 1, wobei der Thermostatikventilkern (6) durch das Zusammenpassloch (113) an dem anderen Ende des vorderen Gehäuses (11) läuft und teilweise in dem Kunststoffschaftsitz (4) untergebracht, und dann durch einen Metalloberdeckel (9) befestigt ist, um mit dem Zusammenpassloch (113) verschraubt zu werden.

4. Die Thermostatikarmatur nach Anspruch 1, wobei das Metallgehäuse (1) aus einer Zinklegierung hergestellt ist.

5. Die Thermostatikarmatur nach Anspruch 1, wobei der Stecker (7) ein Kupferstecker ist.

## Revendications

1. Robinet thermostatique, comprenant un boîtier métallique (1), un corps intérieur en plastique (2) disposé dans le boîtier métallique (1), une tige de vanne en plastique (3) et un siège d'arbre en plastique (4) qui sont connectés dans le corps intérieur en plastique (2), un noyau de vanne d'écoulement (5) et un noyau de vanne thermostatique (6) qui passent à travers le boîtier métallique (1) et qui sont appariés avec la tige de vanne en plastique (3) et le siège d'arbre en plastique (4) respectivement, dans lequel le corps intérieur en plastique (2) est pourvu d'un premier connecteur d'entrée d'eau (21), d'un deuxième connecteur d'entrée d'eau (22) et d'un connecteur de sortie d'eau (23), le premier connecteur d'entrée d'eau (21), le deuxième connecteur d'entrée d'eau (22) et le connecteur de sortie d'eau (23) sont formés d'un seul tenant avec le corps intérieur en plastique (2) ; le premier connecteur d'entrée d'eau (21) est connecté avec le siège d'arbre en plastique (4) à travers une chambre du corps intérieur en plastique (2) pour former un premier passage d'entrée d'eau, le deuxième connecteur d'entrée d'eau (22) est connecté avec le siège d'arbre en plastique (4) pour former un deuxième passage d'entrée d'eau ; l'un parmi le premier passage d'entrée d'eau et le deuxième passage d'entrée d'eau est un passage d'eau chaude, l'autre parmi le premier passage d'entrée d'eau et le deuxième passage d'entrée d'eau est un passage d'eau froide ; et la tige de vanne en plastique (3) coopère avec le corps intérieur en plastique (2) pour former une chambre communiquant avec le connecteur de sortie d'eau (23) pour former un passage de sortie d'eau
dans lequel le corps intérieur en plastique (2) a une première chambre (24), une deuxième chambre (25), une troisième chambre (27) et une chambre d'appariement (26) dans celui-ci, la deuxième chambre (25), la troisième chambre (27) et la chambre d'appariement (26) communiquent entre elles, la chambre d'appariement (26) est connectée entre la deuxième chambre (25) et la troisième chambre (27) ; la tige de vanne en plastique (3) est reçue dans la deuxième chambre (25), une extrémité de la tige de vanne en plastique (3) est connectée à une extrémité de la chambre d'appariement (26) ; le siège d'arbre en plastique (4) est ajusté dans la troisième chambre (27) et a une extrémité connectée à une autre extrémité de la chambre d'appariement (26) ; une extrémité de la première chambre (24) communique avec le siège d'arbre en plastique (4) dans la troisième chambre (27), une autre extrémité de la première chambre (24) est pourvue d'un bouchon (7) ; le premier connecteur d'entrée d'eau (21) est connecté avec le siège d'arbre en plastique (4) à travers la première chambre (24) pour former le premier passage d'entrée d'eau ; une chambre intérieure du siège d'arbre en plastique (4), la chambre d'appariement (26) et une chambre intérieure de la tige de vanne en plastique (3) forment un passage d'eau mélangée, la tige de vanne en plastique (3) coopère avec la deuxième chambre (25) pour former une chambre de sortie d'eau, et la chambre de sortie d'eau communique avec le connecteur de sortie d'eau (23) pour former le passage de sortie d'eau,
dans lequel le boîtier métallique (1) comporte un boîtier avant (11) et un capot d'extrémité arrière (12) pour s'apparier et se connecter entre eux, et deux extrémités du boîtier avant (11) sont formées avec des trous d'appariement (112, 113) pour insertion du noyau de vanne d'écoulement (5) et du noyau de vanne thermostatique (6), respectivement.
dans lequel le noyau de vanne d'écoulement (5) passe à travers le trou d'appariement (112) à une extrémité du boîtier avant (11) et est partiellement reçu dans la deuxième chambre (25) du corps intérieur en plastique (2) et connecté avec la tige de vanne en plastique (3) et est ensuite fixé par un couvercle d'étanchéité métallique (8),
dans lequel le couvercle d'étanchéité métallique (8) est pourvu d'une partie de vis (81), la partie de vis (81) est réduite vers l'intérieur pour former une partie réduite (82), le couvercle d'étanchéité métallique (8) est emmanché sur le noyau de vanne d'écoulement (5), la partie réduite (82) est connectée dans la deuxième chambre (25) du corps intérieur en plastique (2), et la partie de vis (81) est vissée avec le trou d'appariement (112), le robinet thermostatique étant **caractérisé en ce qu'**une surface étagée (83) formée entre la partie de vis (81) et la partie réduite (82) est pressée contre le bouchon (7) du corps intérieur en plastique (2).

2. Robinet thermostatique selon la revendication 1, dans lequel un tampon d'isolation thermique (71) est prévu entre le bouchon (7) et le couvercle d'étanchéité métallique (8).

3. Robinet thermostatique selon la revendication 1, dans lequel le noyau de vanne thermostatique (6) passe à travers le trou d'appariement (113) à l'autre extrémité du boîtier avant (11) et est partiellement reçu dans le siège d'arbre en plastique (4) et ensuite fixé par un couvercle supérieur métallique (9) pour être vissé avec le trou d'appariement (113).

4. Robinet thermostatique selon la revendication 1, dans lequel le boîtier métallique (1) est réalisé en alliage de zinc.

5. Robinet thermostatique selon la revendication 1, dans lequel le bouchon (7) est un bouchon en cuivre.
